# EUROPÄISCHE PATENTANMELDUNG

(11) **EP 0 927 979 A2**
(43) Veröffentlichungstag der Anmeldung: **07.07.1999**
(21) Anmeldenummer: 98250446.6
(22) Anmeldetag: 22.12.1998
(51) Int. Cl.: G08B 15/00

(54) **Vorrichtung zur Überwachung eines Gebäudes und/oder Raumes**

(30) Priorität: 29.12.1997 DE 19758371
(71) Anmelder: Sodji, François, Dipl.-Ing., 12161 Berlin (DE); Rehmet, Ralf, Dipl.-Ing, 14165 Berlin (DE)
(72) Erfinder: Sodji, François, Dipl.-Ing., 12161 Berlin (DE); Rehmet, Ralf, Dipl.-Ing, 14165 Berlin (DE)
(74) Vertreter: Christiansen, Henning, Dipl.-Ing.

(57) **Zusammenfassung**

Die Erfindung betrifft eine Vorrichtung (1) zur Überwachung eines Gebäudes (2, 3) und/oder eines sich in dem Gebäude (2, 3) befindlichen Raumes (4, 5, 6), mit Bilderfassungsmitteln (7, 8), wobei zum Transport der erfaßten Bildinformationen zu einer Empfangseinrichtung, zumindest teilweise, Lichtwellenleiter vorgesehen sind und die Bildinformationen in der Empfangseinrichtung sequentiell ausgewertet werden. Die Mittel zur Bilderfassung sind als Mikro-Objektiv (7, 8) ausgebildet. Als Empfangseinrichtung ist ein Videotarget (15) vorgesehen, wobei für jedes Bilderfassungsmittel eine Opto-Kopplung mit dem Videotarget besteht und in dem optischen Übertragungsweg (9, 9.1 bis 9.n) zwischen dem Videotarget (15) und den Bilderfassungsmitteln (7, 8) eine den jeweiligen Übertragungsweg (9.1 bis 9.n) freigebende oder sperrende Schalteinrichtung (10) angeordnet ist

## Beschreibung

Die Erfindung betrifft eine Vorrichtung zur Überwachung eines Gebäudes und/oder eines oder mehrerer, beliebig ausgebildeter, Räume innerhalb dieses Gebäudes gemäß dem Oberbegriff des Anspruchs 1.

Aus der deutschen Offenlegungsschrift DE 44 03 803 A1 ist ein Übertragungssystem für Video- und Audiosignale bekannt, mit welchem bei der Überwachung von räumlich auseinanderliegenden Objekten eine optische Übertragung von Video- und Audiosignalen vorgesehen ist. Für jedes Objekt ist eine optische Sendeeinheit, beispielsweise ein Videotarget, vorgesehen, deren Signale über Koppler zu einer optischen Empfängereinheit übertragen werden. Es ist eine sequentielle Aufschaltung der mehreren Videotargets auf einen Lichtwellenleiter vorgesehen, wobei die Signale der an unterschiedlichen Orten installierten Videotargets in sogenannten, optische Relais aufweisenden, Einschleifboxen zusammengefaßt und über den Lichtwellenleiter zu einem mit einer Leitzentrale verbundenen, als Monitor ausgebildeten, Videoempfänger geleitet werden. Über eine gesonderte Steuerleitung erfolgt durch die Leitzentrale ein sequentieller Abruf der Bildinformation aus den Einschleifboxen.

Der Einsatz dieses Übertragungssystems für die Überwachung eines Gebäudes erfordert in der Regel, daß außerhalb des Gebäudes und in jedem Raum des Gebäudes mindestens eine Kamera in ausreichend engem Abstand zu installieren sind, um eine weitestgehend lückenlose Video-Überwachung zu erreichen.

Eine derartige Vorrichtung zur Gebäudeüberwachung weist den Nachteil auf, daß einerseits durch die Vielzahl der zum Einsatz zu bringenden Videotargets und andererseits durch eine, beispielsweise durch die notwendige Installation einer Vielzahl von Video-Kreuzschienen, kostenintensive Geräteperipherie ein - im Verhältnis zur erreichbaren Überwachungsleistung - sehr hoher Investitionsaufwand für die Gebäudeüberwachung unvermeidbar ist.

Ausgehend von den Mängeln des Standes der Technik liegt der Erfindung deshalb die Aufgabe zugrunde, eine Vorrichtung zur Video-Überwachung eines Gebäudes und/oder eines in diesem Gebäude vorhandenen Raumes anzugeben, mit welcher bei relativ geringem Investitionsaufwand für die erforderliche Gerätetechnik eine im wesentlichen lückenlose Gebäudeüberwachung durchführbar ist.

Die Aufgabe wird durch die im kennzeichnenden Teil des Anspruchs 1 angegebenen Merkmale gelöst.

Die Erfindung schließt die Erkenntnis ein, daß Mikro-Objektive durch spezielle Zoom- und/oder Weitwinkel-Einrichtungen besonders gute Eigenschaften für die Erfassung von Bildinhalten, insbesondere auch von Bildern in geschlossenen Räumen, aufweisen.

Derartige Mikroobjektive weisen dazu speziell geformte Kunststofflinsen auf, welche sich einseitig derart verjüngen, daß der Kerndurchmesser der Linse an diesem Ende dem Durchmesser der üblicherweise verwendeten Lichtwellenleiter entspricht. Durch Aufbringen einer Ummantelung mit einer im Verhältnis zum Linsenmaterial geringeren Brechzahl werden Lichtleitereigenschaften realisiert. Die Linsenoberfläche wird zur Vergütung mit einer Antireflexionsschicht überzogen. Das Linsenende ist - unter Vermeidung von Kopplungsverlusten - mit einem Lichtwellenleiter mit herkömmlichen Methoden verbindbar. Eventuell vorhandene systematische Abbildungsfehler, beispielsweise Verzerrungen am Bildrand, sind bei der weiteren Bildverarbeitung rechnergestützt korrigierbar.

Ein Mikroobjektiv kann deshalb äußerst kostengünstig ohne aufwendige Justierarbeiten im Spritzgießverfahren hergestellt werden.

Die durch eine Mehrzahl von Mikro-Objektiven erfaßten Bildinhalte können auf einfache und zugleich vorteilhafte Weise über jeweils einen Lichtwellenleiter für eine weitere Bildverarbeitung zu einem einzigen Videotarget übertragen werden.

Diese Form der Übertragung sichert einerseits eine besonders verlustarme Datenübermittlung und verursacht andererseits im Vergleich mit den bekannten Übertragungssystemen auch erheblich geringere Kosten für die erforderliche Gerätetechnik.

Entsprechend der bevorzugten Ausführungsform der Erfindung weist die Vorrichtung zur Video-Überwachung eine Mehrzahl von Bilderfassungsmitteln auf, welche in den Räumen des oder der zu überwachenden Gebäude und/oder im Gelände vor einem zu überwachenden Gebäude angeordnet sind. Die als Mikro-Objektive ausgebildeten Bilderfassungsmittel sind jeweils über einen durch einen Lichtwellenleiter gebildeten optischen Übertragungsweg mit einem einzigen Videotarget verbunden sind.

In diesem optischen Übertragungsweg ist jeweils ein optischer Schalter angeordnet. Diese Schalter sind zwecks seriellem Zugriff auf die durch die Bilderfassungsmittel bereitgestellte Bildinformation zu einer als optischer Multiplexer ausgebildeten Schalteinrichtung zusammengefaßt. Die optischen Schalter geben den jeweiligen optischen Übertragungsweg zwischen den einzelnen Bildaufnahmemitteln und dem Videotarget entweder frei oder sperren die entsprechende Übertragung der Bildinformation.

Die optischen Schalter sind im wesentlichen gleichartig und bevorzugt als Flüssigkeitskristall-Schaltelement (LCD) ausgebildet.

Entsprechend einer Variante der Erfindung - insbesondere bei Einsatz einer relativ geringen Anzahl von Bilderfassungsmitteln - sind optische Schalter in Form eines Polarisationsfilters oder einer elektromechanisch bzw. Elektronisch aktivierbaren Sperre günstig.

Nach der bevorzugten Ausführungsform der Erfindung ist als optischer Übertragungsweg ein bevorzugt als Kunststoffaser-Lichtleitkabel ausgebildeter Lichtwellenleiter vorgesehen, welcher eingangsseitig als Bildaufnahmemittel ein optisches Mikro-Objektiv trägt und ausgangsseitig mit einem in dem optischen Multiplexer angeordneten Flüssigkeitskristall-Schaltelement verbunden ist.

Der vorgesehene Einsatz eines Kunststoffaser-Lichtleitkabels in Kombination mit einem Mikro-Objektiv und einem Flüssigkeitskristall-Schaltelement ist besonders günstig, da einerseits das optische Mikro-Objektiv mit Weitwinkeleigenschaften bzw. Zoomfähigkeit herstellbar ist und ein Kunststoffaser-Lichtleitkabel andererseits eine dämpfungsarme und von der geometrischen Anordnung des Kunststoffaser-Lichtleitkabels im wesentlichen unabhängige Übertragung der Bildinformation gestattet.

Darüberhinaus ist für das Umschalten eines Flüssigkeitskristall-Schaltelements zum Sperren oder Freigeben des optischen Übertragungswegs von dem Mikro-Objektivs zum Videotarget nur eine äußerst geringe Schaltleistung erforderlich und das Umschalten erfolgt in einer minimalen Zeitspanne. Diese Eigenschaft ist zudem in vorteilhafter Weise zur Realisierung einer Blende nach dem Shutter-Prinzip nutzbar.

Sich beispielsweise durch unterschiedliche Lichtverhältnisse am jeweiligen Überwachungsort einstellende Unterschiede in der Grundhelligkeit der einzelnen Kanäle können problemlos bei der nachfolgenden Bildverarbeitung ausgeglichen werden.

Die Verlegung der Kunststoffaser-Lichtleitkabel kann problemlos durchgeführt werden, da diese Kabel äußert flexibel sind und auch extreme Krümmungen keine Dämpfungserhöhung bei der Übertragung der Bildinformation bewirken. Somit sind die Bildaufnahmemittel an nahezu allen Punkten vor einem zu überwachenden Gebäude und/oder in einem zu überwachenden Raum - gegebenenfalls auch mehrfach - ohne Rücksichtnahme auf eventuelle Verlegungsprobleme des dazugehörigen Kunststoffaser-Lichtleitkabels positionierbar.

Entsprechend der bevorzugten Ausführungsform der Erfindung ist der Bildaufnehmer des Videotargets als CCD-Element ausgebildet.

Nach einer anderen vorteilhaften Ausführungsform der Erfindung weist die Vorrichtung zur Video-Überwachung eine Steuerung auf, mit welcher die Aktivierung der Schalteinrichtung und der Bildverarbeitungseinheit des Videotarget zeitlich koordiniert werden kann.

In einer günstigen Variante der Erfindung ist vorgesehen, die Steuerung programmierbar auszubilden, so daß auf einfache Weise ein Überwachungsmodus einstellbar ist, welcher bestimmte Überwachungszeitpunkte bzw. Überwachungsintervalle für die einzelnen Gebäudebereiche festschreibt.

Dadurch ergibt sich der Vorteil, daß ein Überwachungsmodus nach einem wählbaren Algorithums, beispielsweise durch Einsatz eines Zufallsgenerators unvorhersehbar, geändert werden kann, wodurch ein unbemerktes Eindringen von Unbefugten in den Überwachungsbereich nahezu unmöglich wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 eine bevorzugte Ausführungsform der Erfindung in Form eines Blockschaltbildes, sowie
Figur 2 eine günstige Weiterbildung der in Figur 1 gezeigten Ausführungsform der Erfindung.

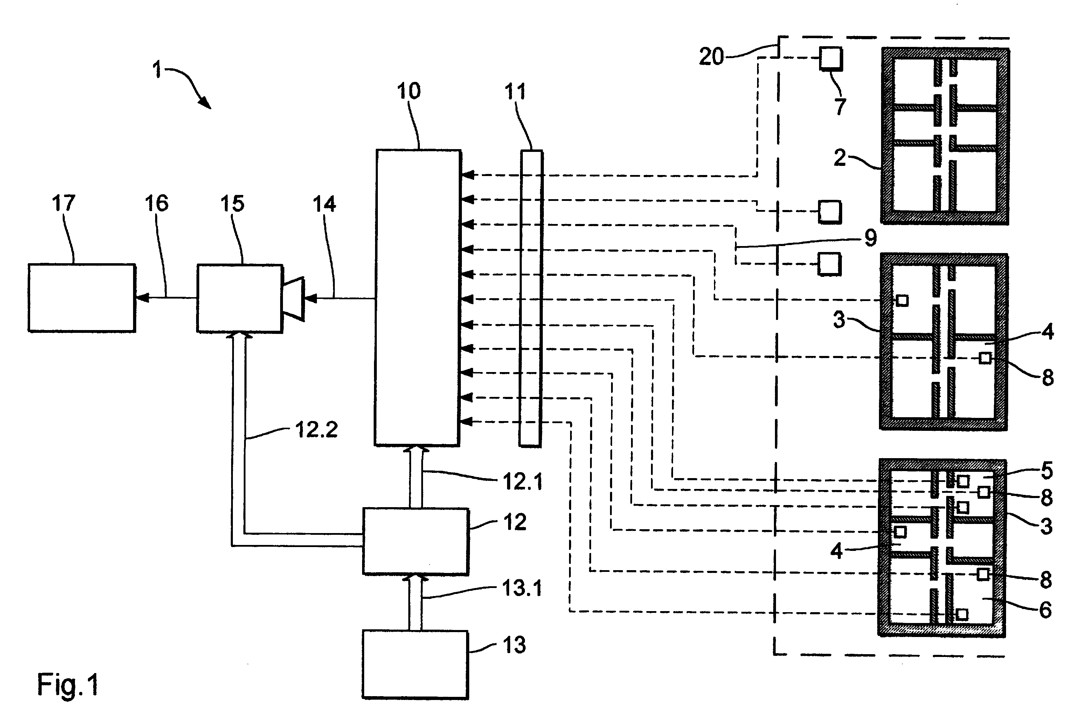

In Figur 1 ist eine Vorrichtung 1 zur Video-Überwachung dargestellt, mit welcher Gebäude 2 von außen bzw. die im Inneren der Gebäude 3 befindlichen Räume 4, 5 und 6 kontinuierlich kontrolliert und das Eintreten von anormalen Ereignissen, beispielsweise das Eindringen unbefugter Personen in ein Gebäude 2 oder das unberechtigte Entfernen eines Gegenstandes aus einem Raum 4, 5 oder 6 des Gebäudes 3, festgestellt werden kann.

Dazu sind in dem Gelände vor dem Gebäude 2 und in den Räumen 4, 5, 6 der Gebäude 3 Mikro-Objektive 7 und 8 an geeigneter Stelle positioniert, welche durch Weitwinkeleigenschaften und Vergrößerungsfähigkeit einen besonders großen Gebäude- oder Raumbereich erfassen können. Die Mikro-Objektive 7, 8 sind optisch gleichartig ausgebildet und unterscheiden sich nur in konstruktiven Einzelheiten, welche durch unterschiedliche Einsatzbedingungen, beispielsweise durch einen ausschließlichen Einsatz im Innen- oder im Außenbereich, erforderlich sind.

In Abhängigkeit von der Größe des zu überwachenden Gebäudes 2, 3 oder des zu überwachenden Raums 4, 5, 6 sind in dem dargestellten Beispiel ein, zwei oder drei Mikro-Objektive 7, 8 zur Erfassung des jeweiligen Bildinhalts vorgesehen.

Der optische Übertragungsweg 9 zwischen den Mikro-Objektiven 7, 8 und dem Videotarget 15 wird durch einzelne Multi-Kunststoffaser-Lichtleitkabel gebildet, welche unter Verwendung einer Halterung 11 mit ihren Faserenden mit einer als optischer Multiplexer ausgebildeten Schalteinrichtung 10 verbunden sind.

Durch eine Steuerung 12 werden Signale 12.1 und 12.2 erzeugt, welche den optischen Multiplexer 10 und das Videotarget 15 zeitlich koordiniert, beispielsweise für eine richtige Bildauswahl der Videotarget durch Kreuzschienenfunktion, aktivieren.

Das optische Ausgangssignal 14 mit dem bei der Gebäude- und/oder Raumüberwachung durch die Objektive 7, 8 erfaßten Bildinhalt wird von dem optischen Multiplexer 10 zu dem Bildaufnehmer einem einzigen Videotarget 15 geführt, dort in elektrische Signale umgewandelt, und als elektronisch aufbereitetes Bildsignal 16 auf einem Monitor 17 zur Anzeige gebracht.

Um die zeitliche Auswahl der Ausgangssignale 12.1 und 12.2 variieren zu können, ist für die Steuerung 12 eine Programmiereinrichtung 13 vorgesehen, deren Ausgangssignale mit 13.1 bezeichnet sind.

Eine derartige Programmierbarkeit der Steuerung 12 sichert in vorteilhafter Weise einen Modus zur Video-Überwachung des Objekts 20 mit mehreren Gebäuden 2, 3 und Räumen 4, 5, 6, welches beispielsweise unterschiedliche, sich zu verschiedenen Tageszeiten in ihrer Sequenz entsprechend den Notwendigkeiten ändernde Überwachungs-Zyklen für einzelne Gebäude und/oder Räume aufweist und dadurch zu einem erhöhten Sicherheitseffekt bei der vorstehend beschriebenen Video-Überwachung führt.

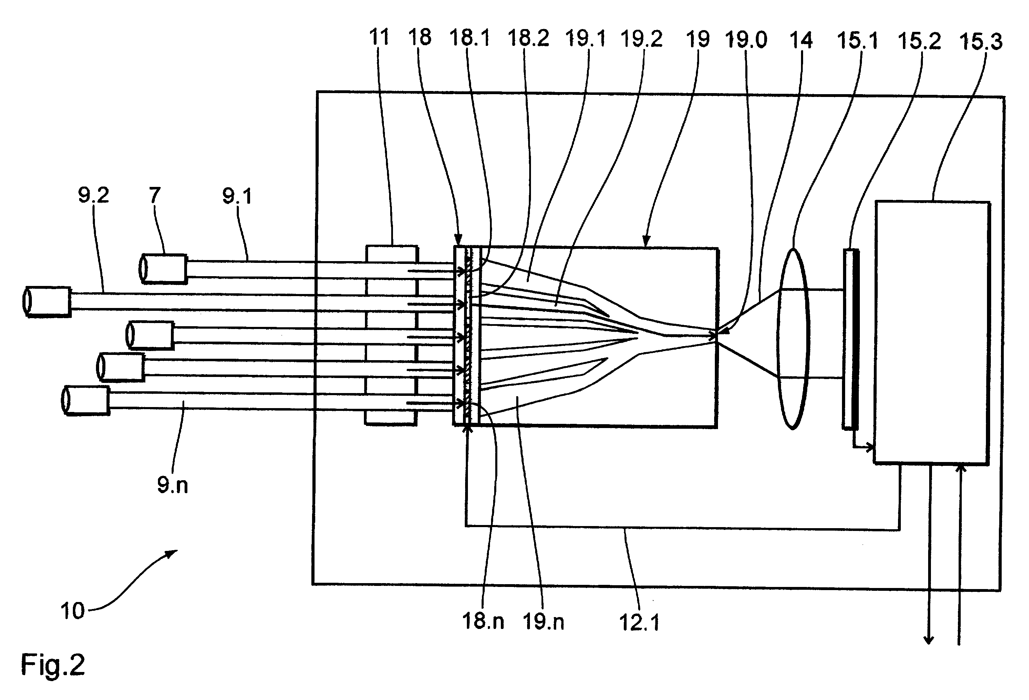

In Figur 2 ist der grundsätzliche Aufbau des in der Vorrichtung 1 zur Video-Überwachung gemäß Figur 1 eingesetzten optischen Multiplexers 10 in schematisierter Form dargestellt.

Der optische Multiplexer 10 weist eine Matrix 18 mit einer Mehrzahl von, als Flüssigkeitskristall-Schaltelement (LCD) ausgebildeten Schaltern 18.1 bis 18.n und eine Koppeleinrichtung 19 auf. Der optische Eingang der Flüssigkeitskristall-Schaltelemente 18.1 bis 18.n ist jeweils mit einem Lichtleitkabel 9.1 bis 9.n verbunden, welche aus Gründen ausreichender mechanischer Stabilität der Verbindungsstelle durch eine gesonderte Halterung 11 fixiert sind.

Die optischen Ausgänge der Flüssigkeitskristall-Schaltelemente 18.1 bis 18.n sind mit der Kopplungseinrichtung 19 verbunden, welche als optischer Wellenleiterkoppler ausgebildet ist. Die einzelnen Kanäle der Kopplungseinrichtung 19 bestehen aus dem gleichen Material wie die Kunststoffaser-Lichtleitkabel 9.1 bis 9.n.

Die Koppeleinrichtung weist eine Mehrzahl von den in der Schalteinrichtung 10 vorgesehenen Schaltern 18.1 bis 18.n zugeordnete Kanaleingänge 19.1 bis 19.n auf, welche auf einen einzigen optischen Kanalausgang 19.0 geführt sind. Hier wird der mit bestimmten Bildinhalt aufweisende Lichtstrahl 14 durch Beugung divergiert und fällt auf eine diesen Effekt ausgleichende Sammellinse 15.1 am Bildeingang des Videotargets 15 und von dort auf den Bildaufnehmer 15.2. Der Bildaufnehmer des Videotargets ist als hochwertiges CCD-Bauteil ausgebildet und wird durch die Wirkung der Sammellinse voll ausgeleuchtet.

Durch die Ausgangssignale 12.1 der Steuerung 12 wird nach einem vorgebbaren Überwachungsschema festgelegt, welches der Flüssigkeitskristall-Schaltelemente 18.1 bis 18.n in welcher Reihenfolge und/oder welcher Häufigkeit "optisch durchlässig" geschaltet wird. Im vorliegenden Beispiel ist das mit dem Kunststoffaser-Lichtleitkabel 9.2 verbundene Flüssigkeitskristall-Schaltelement 18.2 durch Abschalten der Steuerspannung in den lichtduchlässigen Zustand geschaltet.

Anstelle der Flüssigkeitskristall-Elemente (LCD) sind auch andere als optische Ventile verwendbare Schaltelemente einsetzbar. Dazu gehören Kerr-Zellen, Polarisationsfilter mit veränderbarer Polarisationsrichtung oder entsprechend ansteuerbare Elemente mit ansteuerbarer optischer Ventilwirkung.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung (1), insbesondere zur Überwachung eines Gebäudes (2, 3) und/oder eines sich in dem Gebäude (2, 3) befindlichen Raumes (4, 5, 6), mit mehreren Bilderfassungsmitteln (7, 8), wobei die verschiedenen Bildinformationen auf einem optischen Übertragungsweg sequentiell übermittelt werden,
**dadurch gekennzeichnet**,
daß jedes Bilderfassungsmittel ein Mikro-Objektiv (7, 8) aufweist und ein einziger opto-elektrischer Wandler in Form eines Videotargets (15) vorgesehen ist, wobei zwischen jedem Bilderfassungsmittel und dem Videotarget ein optischer Übertragungsweg (9, 9.1 bis 9.n) mit einer diesen wahlweise freigebenden oder sperrenden optischen Schalteinrichtung (10) vorgesehen ist.

2. Vorrichtung nach Anspruch 1, **dadurch gekennzeichnet**, daß die Schalteinrichtung zur sequentiellen Freigabe der verschiedenen optischen Übertragungswege (9, 9.1 bis 9.n) als für die verschiedenen Übertragungswege gemeinsamer optischer Multiplexer (10) ausgebildet ist.

3. Vorrichtung nach Anspruch 2, **dadurch gekennzeichnet**, daß der optische Multiplexer (10) eine mindestens der Anzahl der Bilderfassungsmittel (7, 8) entsprechende Anzahl von im wesentlichen gleichartig ausgebildeten optischen Schaltern (18.1 bis 18.n) aufweist.

4. Vorrichtung nach Anspruch 3, **dadurch gekennzeichnet**, daß die Schalter als Flüssigkeitskristall-Schaltelement (18.1 bis 18.n), als ansteuerbares Polarisationsfilter mit veränderbarer Polarisationsebene oder als ein anderes elektromechanisch oder elektronisch aktivierbares Verschlußelement ausgebildet sind.

5. Vorrichtung nach einem der Ansprüche 3 oder 4, **gekennzeichnet durch** eine matrixförmige Anordnung der optischen Schalter (18.1 bis 18.n).

6. Vorrichtung nach einem der vorhergehenden Ansprüche, **dadurch gekennzeichnet**, daß in dem Strahlungsweg zwischen der optischen Schalteinrichtung (10) und des Videotargets (15) eine optische Kopplungseinrichtung (19) vorgesehen ist, welche eine vollflächige Ausleuchtung des Bildaufnehmers (15.2) des Videotargets (15) durch die von dem jeweiligen Lichtwellenleiter (9.1 bis 9.n) übertragene Bildinformation sichert.

7. Vorrichtung nach Anspruch 6, **dadurch gekennzeichnet**, daß der Bildaufnehmer als CCD-Element (15.2) ausgebildet ist.

8. Vorrichtung nach einem der vorhergehenden Ansprüche, **dadurch gekennzeichnet**, daß eine programmierbare Steuerung (12) vorgesehen ist, durch welche die Aktivierung der Schalteinrichtung (10) und der Bildverarbeitungseinheit (15.3) erfolgt.
